# FASCICULE DE BREVET EUROPEEN

(11) **EP 4 444 445 B1**
(45) Date de publication et mention de la délivrance du brevet: **13.08.2025**
(21) Numéro de dépôt: 22830548.8
(22) Date de dépôt: 06.12.2022
(51) Int. Cl.: B01D 53/00, B01D 53/22, B01D 53/047, F25J 3/02, C10L 3/10, F25J 1/00

(54) **INSTALLATION DE PRODUCTION BIOMÉTHANE ET DE CO2 LIQUIDE AVEC UN MOYEN D'ÉVITER L'ACCUMULATION D'HYDROGÈNE ET D'OXYGÈNE**
ANLAGE ZUR HERSTELLUNG VON FLÜSSIGEM CO2 UND BIOMETHAN MIT EINEM MITTEL ZUR VERHINDERUNG DER BILDUNG VON WASSERSTOFF UND SAUERSTOFF
FACILITY FOR PRODUCING LIQUID CO2 AND BIOMETHANE WITH A MEANS FOR PREVENTING THE BUILD-UP OD HYDROGEN AND OXYGEN

(30) Priorité: 08.12.2021 FR 2113158
(43) Date de publication de la demande: 16.10.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: VALENTIN, Solène, 38360 Sassenage (FR); BARRAUD, François, 38360 Sassenage (FR); ZICK, Golo, 38360 SASSENAGE (FR); GRABIE, Véronique, 38360 Sassenage (FR)
(74) Mandataire: Air Liquide
(86) Numéro de dépôt international: PCT/EP2022/084637
(87) Numéro de publication internationale: WO 2023/104815

(56) Documents cités:
- WO-A1-2017/109305
- WO-A1-2019/122661
- US-A- 5 642 630
- US-A1- 2021 094 894

## Description

La présente invention est relative à une installation et à un procédé de production de biométhane et de CO₂ liquide à partir d'un flux de biogaz.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, et dont les conditions sont contrôlées, appelé méthaniseur ou digesteur, puis dans un post-digesteur, similaire au digesteur et permettant de pousser plus loin la réaction de méthanisation.

On appellera biomasse tout groupement de matières organiques pouvant se transformer en énergie à travers ce processus de méthanisation e.g. boues de station d'épuration, fumiers/lisiers, résidus agricoles, déchets alimentaires...

Le digesteur, c'est-à-dire le réacteur dédié à la méthanisation de la biomasse, est une cuve fermée, chauffée ou non (opération à une température fixée, entre la température ambiante et 55°C) et dont le contenu constitué de la biomasse est brassé, en continu ou séquentiel. Les conditions dans le digesteur sont anaérobies et le biogaz généré se retrouve dans l'espace de tête du digesteur (ciel gazeux), où il est prélevé. Les post-digesteurs sont similaires aux digesteurs.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH₄) et du dioxyde de carbone (CO₂) dans des proportions variables en fonction du mode d'obtention et du substrat mais peut également contenir, en moindres proportions de l'eau, de l'azote, de l'hydrogène sulfuré (H2S), de l'oxygène, ainsi que des composés organiques autres, à l'état de traces, dont le H₂S, entre 10 et 50,000 ppmv.

Selon les matières organiques dégradées et les techniques utilisées, les proportions des composants diffèrent, mais en moyenne le biogaz comporte, sur gaz sec, de 30 à 75% de méthane, de 15 à 60% de CO₂, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

US2021/094894A1 décrit une installation utilisable pour la production de biométhane et de CO₂ liquide ainsi qu'un procédé mettant en oeuvre cette unité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au cœur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (bioGNL)...

D'autre part, le biogaz est également constitué en grande partie de dioxyde de carbone qui peut être valorisé comme un produit pour des marchés diverses et variés tels que les boissons gazéifiées, les serres et le nettoyage. Ce dioxyde de carbone a besoin d'être liquéfié pour être transporté vers son utilisation. Cette liquéfaction permet également d'atteindre la qualité du gaz requise. Le reste des composés gazeux étant chargés en méthane est recyclé vers le procédé d'épuration du biogaz.

Ce gaz recyclé contient majoritairement du dioxyde de carbone, entre 45 et 75%, du méthane, entre 25 et 55%, de l'azote, de l'oxygène et de l'hydrogène si présent dans le biogaz. L'oxygène et l'hydrogène auront tendance à s'accumuler entre le procédé d'épuration du biogaz et le procédé de liquéfaction du CO₂ jusqu'à atteindre des compositions explosives.

En effet, l'hydrogène est une molécule très petite qui permée au travers des membranes et se retrouve donc dans les évents de l'unité d'épuration qui sont dirigés vers l'unité de liquéfaction du CO₂.

L'hydrogène est un incondensable qui sera entièrement recyclé vers l'épurateur après traitement des évents par le liquéfacteur. Si l'hydrogène est recyclé indéfiniment entre les deux unités, sa concentration sera augmentée au cours du temps et pourra atteindre un niveau entraînant un risque d'explosion.

L'oxygène permée en partie au travers des membranes et se retrouve donc, en partie, dans l'évent. L'oxygène est également un incondensable qui se retrouvera dans le recycle vers l'épurateur. Une concentration élevée en oxygène dans le gaz de retour à l'épurateur présente un risque d'explosion.

Partant de là un problème qui se pose est de fournir une installation de production biométhane et de CO₂ liquide comprenant un moyen d'éviter l'accumulation d'hydrogène et d'oxygène dans le recycle.

Une solution de la présente invention est une installation de production de biométhane et de CO₂ liquide, comprenant :
- Une unité de production de biogaz,
- Au moins une unité de séparation membranaire du biogaz permettant de produire du biométhane et un mélange gazeux M1 comprenant majoritairement du dioxyde de carbone,
- Une unité de distillation cryogénique du mélange gazeux M1 permettant de produire du CO₂ liquide et un mélange gazeux M2 comprenant du dioxyde de carbone, du méthane, de l'oxygène et de l'hydrogène,
- Une ou plusieurs membranes situées sur le flux du mélange gazeux M2 et permettant de séparer le méthane du mélange oxygène-hydrogène compris dans le mélange gazeux M2,
- Un moyen de recyclage du méthane issu du mélange gazeux M2 vers l'unité de séparation membranaire, et
- Un évent permettant l'évacuation du mélange oxygène-hydrogène issu du mélange gazeux M2.

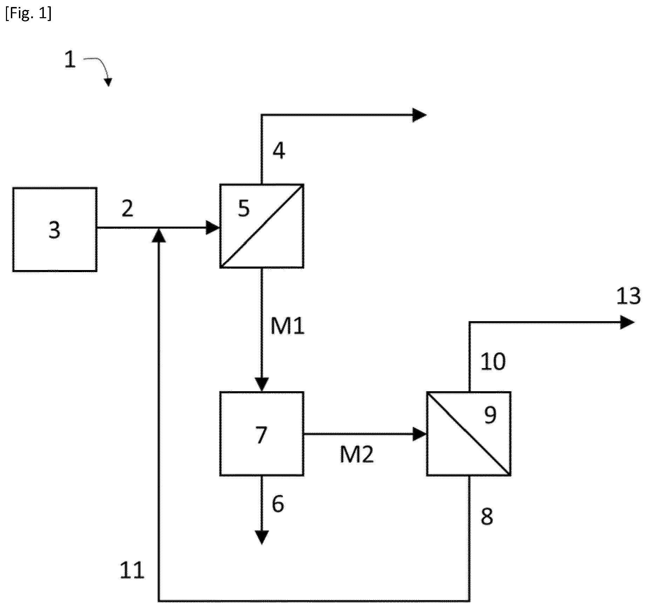

Un exemple d'installation selon l'invention est représenté [Fig.1].

Selon le cas l'installation selon l'invention peut présenter une ou plusieurs des caractéristiques ci-dessous :
- L'installation comprend entre l'unité de production du biogaz et l'unité de séparation membranaire un moyen de compression du biogaz ;
- le moyen de compression est un compresseur à vis lubrifié ;
- L'installation comprend entre l'unité de production du biogaz et l'unité de séparation membranaire une unité permettant d'éliminer au moins en partie le sulfure d'hydrogène et les composés organiques volatils ;
- l'unité permettant d'éliminer au moins en partie le sulfure d'hydrogène et les composés organiques volatils est une unité d'adsorption à pression modulée.
- la ou les membranes situées sur le flux de mélange gazeux M2 est plus perméable à l'oxygène et à l'hydrogène qu'au méthane ;
- l'unité de séparation membranaire comprend trois ou quatre étages membranaires.
- l'unité de séparation membranaire comprend :
   ▪ Un premier étage de séparation par membrane muni d'une première membrane apte à recevoir le flux de biogaz et à fournir un premier perméat et un premier rétentat, ladite première membrane étant plus perméable au dioxyde de carbone qu'au méthane,
   ▪ Un deuxième étage de séparation par membrane muni d'une seconde membrane apte à recevoir un second gaz d'alimentation et à fournir un second perméat et un second rétentat, ladite seconde membrane étant plus perméable au dioxyde de carbone qu'au méthane, et ledit deuxième étage de séparation par membrane étant connecté en série avec le premier étage de séparation par membrane de telle sorte que le premier rétentat constitue le second gaz d'alimentation,
   ▪ Un troisième étage de séparation par membrane muni d'une troisième membrane apte à recevoir un troisième gaz d'alimentation et à fournir un troisième perméat et un troisième rétentat, ladite troisième membrane étant plus perméable au dioxyde de carbone qu'au méthane, et ledit troisième étage de séparation par membrane étant connecté en série avec le premier étage de séparation par membrane de telle sorte que le premier perméat constitue le troisième gaz d'alimentation.
- l'unité de séparation membranaire peut comprendre un quatrième étage de séparation par membrane muni d'une quatrième membrane apte à recevoir un gaz d'alimentation et à fournir un perméat et un rétentat, ladite quatrième membrane étant plus perméable au dioxyde de carbone qu'au méthane, et ledit quatrième étage de séparation par membrane étant connectée en série avec le troisième étage de séparation par membrane de telle sorte que le troisième rétentat constitue le quatrième gaz d'alimentation.

La présente invention a également pour objet un procédé de production de méthane et de CO₂ liquide, mettant en œuvre l'installation selon l'invention et comprenant :
a) Une étape de production de biogaz,
b) Une première étape de séparation membranaire du biogaz de manière à produire du biométhane et un mélange gazeux M1 comprenant majoritairement du dioxyde de carbone,
c) Une étape de distillation cryogénique du mélange gazeux M1 de manière à produire du CO₂ liquide et un mélange gazeux M2 comprenant du dioxyde de carbone, du méthane, de l'oxygène et de l'hydrogène,
d) Une deuxième étape de séparation membranaire du mélange gazeux M2 de manière à séparer le méthane du mélange oxygène-hydrogène compris dans le mélange gazeux M2,
e) Une étape de recyclage du méthane issu du mélange gazeux M2 vers l'unité de séparation membranaire, et
f) Une étape d'évacuation du mélange oxygène-hydrogène issu du mélange gazeux M2.

Selon le cas le procédé selon l'invention peut présenter une ou plusieurs des caractéristiques ci-dessous :
- Le procédé comprend entre les étapes a) et b) une étape de compression du biogaz.
- Le procédé comprend entre les étapes a) et b) une étape de pré-purification permettant d'éliminer au moins en partie le sulfure d'hydrogène et les composés organiques volatils.
- l'étape de pré-purification est une étape de purification par adsorption ;
- l'étape f) est réalisée en continu.

La solution selon l'invention propose d'utiliser une ou plusieurs membranes pour mettre à l'évent en continu un débit de ce gaz de recycle du liquéfacteur du CO₂ vers l'épurateur du biogaz. La ou les membranes utilisées séparent préférentiellement l'oxygène et l'hydrogène du méthane et du dioxyde de carbone.

La membrane est une multitude de tubes micrométriques, appelés fibres, constituées d'une matière poreuse au travers de laquelle les composés gazeux sont susceptibles de passer. La séparation des différents composés gazeux au travers d'une membrane se fait par différence de pression entre le flux à l'intérieur des fibres membranaires et le flux à l'extérieur des fibres membranaires et par différence d'affinité des composés gazeux avec la fibre membranaire. Le flux gazeux qui passe au travers des pores de la fibre membranaire est appelé perméat. Le flux gazeux qui ne passe pas au travers des pores de la fibre membranaire est appelé rétentat. L'hydrogène et l'oxygène dilués dans du dioxyde de carbone se retrouve au perméat de la membrane tandis que le méthane dilué dans du dioxyde de carbone se retrouve au rétentat de la membrane. Le rétentat de la membrane est recyclé vers l'épurateur du biogaz tandis que le perméat de la membrane est mise à l'évent.

La présente invention va être décrite plus en détail à l'aide de l'exemple ci-dessous.

### EXEMPLE

Le biogaz contient 100 ppm d'hydrogène et 0,2% d'oxygène. L'hydrogène doit être complètement purgé au travers de la membrane.

Cette solution impactant le rendement biométhane est nécessaire pour assurer la sécurité de l'installation. Elle est illustrée dans ce tableau, donné à titre indicatif. Ce tableau prend l'exemple d'un traitement d'un débit maximal de biogaz (1100 Nm³/h de biogaz brut humide) à composition nominale.

| | Biogaz | LCO₂ | Biméthane | Purge |
|---|---|---|---|---|
| Débit sec | 1043 Nm3/h | 374 Nm3/h | 667 Nm3/h | 1.7 Nm3/h |
| N2 | 0.4% | 0.0% | 0.7% | 0.6% |
| O2 | 0.2% | 0.0% | 0.3% | 8.3% |
| Méthane | 62.4% | 0.0% | 97.5% | 8.0% |
| CO₂ | 37.0% | 100.0% | 1.6% | 76.7% |
| H2 | 0.01% | 0.0% | 0.0% | 6.4% |
| Rendement BioCH4 | | | 99.98% | |

Autrement dit la solution selon l'invention permet non seulement d'assurer la sécurité de l'opération en éliminant les composés responsables de risques d'explosion, mais aussi d'augmenter le rendement en méthane.

## Revendications

1. Installation (1) de production de biométhane (4) et de CO₂ liquide (6), comprenant :
- Une unité (3) de production de biogaz (2),
- Au moins une unité (5) de séparation membranaire du biogaz permettant de produire du biométhane (4) et un mélange gazeux M1 comprenant majoritairement du dioxyde de carbone,
- Une unité (7) de distillation cryogénique du mélange gazeux M1 permettant de produire du CO₂ liquide (6) et un mélange gazeux M2 comprenant du dioxyde de carbone, du méthane, de l'oxygène et de l'hydrogène,
- Une ou plusieurs membranes (9) situées sur le flux du mélange gazeux M2 et permettant de séparer le méthane (8) du mélange oxygène-hydrogène (10) compris dans le mélange gazeux M2,
- Un moyen (11) de recyclage du méthane (8) issu du mélange gazeux M2 vers l'unité (5) de séparation membranaire, et
- Un évent (13) permettant l'évacuation du mélange oxygène-hydrogène (10) issu du mélange gazeux M2.

2. Installation selon la revendication 1, **caractérisée en ce qu'**elle comprend entre l'unité (3) de production du biogaz et l'unité (5) de séparation membranaire un moyen de compression du biogaz.

3. Installation selon la revendication 2, **caractérisée en ce que** le moyen de compression est un compresseur à vis lubrifié.

4. Installation selon l'une des revendications 1 à 3, **caractérisée en ce qu'**elle comprend entre l'unité (3) de production du biogaz et l'unité (5) de séparation membranaire une unité permettant d'éliminer au moins en partie le sulfure d'hydrogène et les composés organiques volatils.

5. Installation selon la revendication 4, **caractérisée en ce que** l'unité permettant d'éliminer au moins en partie le sulfure d'hydrogène et les composés organiques volatils est une unité d'adsorption à pression modulée.

6. Installation selon l'une des revendications 1 à 5, **caractérisée en ce que** la membrane (9) située sur le flux de mélange gazeux M2 est plus perméable à l'oxygène et à l'hydrogène qu'au méthane.

7. Installation selon l'une des revendications 1 à 6, **caractérisée en ce que** l'unité (5) de séparation membranaire comprend trois ou quatre étages membranaires.

8. Installation selon la revendication 7, **caractérisée en ce que** l'unité (5) de séparation membranaire comprend :
- Un premier étage de séparation par membrane muni d'une première membrane apte à recevoir le flux de biogaz (2) et à fournir un premier perméat et un premier rétentat, ladite première membrane étant plus perméable au dioxyde de carbone qu'au méthane,
- Un deuxième étage de séparation par membrane muni d'une seconde membrane apte à recevoir un second gaz d'alimentation et à fournir un second perméat et un second rétentat, ladite seconde membrane étant plus perméable au dioxyde de carbone qu'au méthane, et ledit deuxième étage de séparation par membrane étant connecté en série avec le premier étage de séparation par membrane de telle sorte que le premier rétentat constitue le second gaz d'alimentation,
- Un troisième étage de séparation par membrane muni d'une troisième membrane apte à recevoir un troisième gaz d'alimentation et à fournir un troisième perméat et un troisième rétentat, ladite troisième membrane étant plus perméable au dioxyde de carbone qu'au méthane, et ledit troisième étage de séparation par membrane étant connecté en série avec le premier étage de séparation par membrane de telle sorte que le premier perméat constitue le troisième gaz d'alimentation.

9. Installation selon la revendication 8, **caractérisée en ce que** l'unité (5) de séparation membranaire peut comprendre un quatrième étage de séparation par membrane muni d'une quatrième membrane apte à recevoir un gaz d'alimentation et à fournir un perméat et un rétentat, ladite quatrième membrane étant plus perméable au dioxyde de carbone qu'au méthane, et ledit quatrième étage de séparation par membrane étant connectée en série avec le troisième étage de séparation par membrane de telle sorte que le troisième rétentat constitue le quatrième gaz d'alimentation.

10. Procédé de production de méthane et de CO₂ liquide, mettant en œuvre l'installation (1) telle que définie dans l'une des revendications 1 à 9 et comprenant :
a) Une étape de production de biogaz (2),
b) Une première étape de séparation membranaire du biogaz de manière à produire du biométhane (4) et un mélange gazeux M1 comprenant majoritairement du dioxyde de carbone,
c) Une étape de distillation cryogénique du mélange gazeux M1 de manière à produire du CO₂ liquide (6) et un mélange gazeux M2 comprenant du dioxyde de carbone, du méthane, de l'oxygène et de l'hydrogène,
d) Une deuxième étape de séparation membranaire du mélange gazeux M2 de manière à séparer le méthane (8) du mélange oxygène-hydrogène (10) compris dans le mélange gazeux M2,
e) Une étape de recyclage du méthane (8) issu du mélange gazeux M2 vers l'unité (5) de séparation membranaire, et
f) Une étape d'évacuation du mélange oxygène-hydrogène (10) issu du mélange gazeux M2.

11. Procédé selon la revendication 10, **caractérisé en ce qu'**il comprend entre les étapes a) et b) une étape de compression du biogaz.

12. Procédé selon l'une des revendications 10 ou 11, **caractérisé en ce qu'**il comprend entre les étapes a) et b) une étape de pré-purification permettant d'éliminer au moins en partie le sulfure d'hydrogène et les composés organiques volatils.

13. Procédé selon la revendication 12, **caractérisé en ce que** l'étape de pré-purification est une étape de purification par adsorption.

14. Procédé selon l'une des revendications 10 à 13, **caractérisé en ce que** l'étape f) est réalisée en continu.

## Patentansprüche

1. Anlage (1) zur Herstellung von Biomethan (4) und flüssigem CO₂ (6), umfassend :
- Eine Einheit (3) zur Erzeugung von Biogas (2),
- Mindestens eine Einheit (5) zur Membrantrennung des Biogases, mit der Biomethan (4) und ein Gasgemisch M1, das überwiegend Kohlendioxid enthält, erzeugt werden können,
- Eine Einheit (7) zur kryogenen Destillation des Gasgemischs M1, mit der flüssiges CO₂ (6) und ein Gasgemisch M2, das Kohlendioxid, Methan, Sauerstoff und Wasserstoff enthält, erzeugt werden können,
- Eine oder mehrere Membranen (9), die sich im Strom des Gasgemischs M2 befinden und es ermöglichen, das Methan (8) von dem im Gasgemisch M2 enthaltenen Sauerstoff-Wasserstoff-Gemisch (10) zu trennen,
- Ein Mittel (11) zur Rückführung des aus dem Gasgemisch M2 stammenden Methans (8) zur Membrantrenneinheit (5), und
- Eine Entlüftung (13) zum Abführen des Sauerstoff-Wasserstoff-Gemischs (10), das aus dem Gasgemisch M2 stammt.

2. Anlage nach Anspruch 1, **dadurch gekennzeichnet, dass** sie zwischen der Einheit (3) zur Erzeugung des Biogases und der Einheit (5) zur Membrantrennung ein Mittel zur Kompression des Biogases umfasst.

3. Anlage nach Anspruch 2, **dadurch gekennzeichnet, dass** das Kompressionsmittel ein geschmierter Schraubenkompressor ist.

4. Anlage nach einem der Ansprüche 1 bis 3, **dadurch gekennzeichnet, dass** sie zwischen der Einheit (3) zur Erzeugung des Biogases und der Einheit (5) zur Membrantrennung eine Einheit zur zumindest teilweisen Entfernung von Schwefelwasserstoff und flüchtigen organischen Verbindungen umfasst.

5. Anlage nach Anspruch 4, **dadurch gekennzeichnet, dass** die Einheit zur zumindest teilweisen Entfernung von Schwefelwasserstoff und flüchtigen organischen Verbindungen eine Druckwechseladsorptionseinheit ist.

6. Anlage nach einem der Ansprüche 1 bis 5, **dadurch gekennzeichnet, dass** die Membran (9), die sich über dem Gasgemischstrom M2 befindet, für Sauerstoff und Wasserstoff durchlässiger ist als für Methan.

7. Anlage nach einem der Ansprüche 1 bis 6, **dadurch gekennzeichnet, dass** die Membrantrenneinheit (5) drei oder vier Membranstufen umfasst.

8. Anlage nach Anspruch 7, **dadurch gekennzeichnet, dass** die Membrantrenneinheit (5) umfasst:
- Eine erste Membrantrennstufe, die mit einer ersten Membran versehen ist, die geeignet ist, den Biogasstrom (2) aufzunehmen und ein erstes Permeat und ein erstes Retentat zu liefern, wobei die erste Membran für Kohlendioxid durchlässiger ist als für Methan,
- Eine zweite Membrantrennstufe, die mit einer zweiten Membran versehen ist, die geeignet ist, ein zweites Speisegas aufzunehmen und ein zweites Permeat und ein zweites Retentat zu liefern, wobei die zweite Membran für Kohlendioxid durchlässiger ist als für Methan, und wobei die zweite Membrantrennstufe mit der ersten Membrantrennstufe in Reihe geschaltet ist, so dass das erste Retentat das zweite Speisegas bildet,
- Eine dritte Membrantrennstufe, die mit einer dritten Membran versehen ist, die geeignet ist, ein drittes Speisegas aufzunehmen und ein drittes Permeat und ein drittes Retentat bereitzustellen, wobei die dritte Membran für Kohlendioxid durchlässiger ist als für Methan, und wobei die dritte Membrantrennstufe mit der ersten Membrantrennstufe in Reihe geschaltet ist, so dass das erste Permeat das dritte Speisegas bildet.

9. Anlage nach Anspruch 8, **dadurch gekennzeichnet, dass** die Membrantrenneinheit (5) eine vierte Membrantrennstufe umfassen kann, die mit einer vierten Membran versehen ist, die geeignet ist, ein Speisegas aufzunehmen und ein Permeat und ein Retentat bereitzustellen, wobei die vierte Membran für Kohlendioxid permeabler ist als für Methan, und die vierte Membrantrennstufe mit der dritten Membrantrennstufe in Reihe geschaltet ist, so dass das dritte Retentat das vierte Speisegas bildet.

10. Verfahren zur Herstellung von Methan und flüssigem CO₂ unter Verwendung der Anlage (1), wie sie in einem der Ansprüche 1 bis 9 definiert ist, und umfassend :
a) Einen Schritt zur Erzeugung von Biogas (2),
b) Einen ersten Schritt zur Membrantrennung des Biogases, um Biomethan (4) und ein Gasgemisch M1 zu erzeugen, das überwiegend Kohlendioxid enthält,
c) Ein Schritt der kryogenen Destillation des Gasgemischs M1, um flüssiges CO₂(6) und ein Gasgemisch M2 zu erzeugen, das Kohlendioxid, Methan, Sauerstoff und Wasserstoff enthält,
d) Ein zweiter Schritt zur Membrantrennung des Gasgemischs M2, um das Methan (8) von dem in dem Gasgemisch M2 enthaltenen Sauerstoff-Wasserstoff-Gemisch (10) zu trennen,
e) Einen Schritt der Rückführung des Methans (8) aus dem Gasgemisch M2 zur Membrantrenneinheit (5), und
f) Einen Schritt zum Abführen des aus dem Gasgemisch M2 stammenden Sauerstoff-Wasserstoff-Gemischs (10).

11. Verfahren nach Anspruch 10, **dadurch gekennzeichnet, dass** es zwischen den Schritten a) und b) einen Schritt zum Komprimieren des Biogases umfasst.

12. Verfahren nach einem der Ansprüche 10 oder 11, **dadurch gekennzeichnet, dass** es zwischen den Schritten a) und b) einen Vorreinigungsschritt umfasst, der es ermöglicht, Schwefelwasserstoff und flüchtige organische Verbindungen zumindest teilweise zu entfernen.

13. Verfahren nach Anspruch 12, **dadurch gekennzeichnet, dass** der Vorreinigungsschritt ein Adsorptionsreinigungsschritt ist.

14. Verfahren nach einem der Ansprüche 10 bis 13, **dadurch gekennzeichnet, dass** Schritt f) kontinuierlich durchgeführt wird.

## Claims

1. Installation (1) for producing biomethane (4) and liquid CO₂ (6), comprising :
- A unit (3) for producing biogas (2),
- At least one biogas membrane separation unit (5) making it possible to produce biomethane (4) and a gaseous mixture M1 comprising mainly carbon dioxide,
- A unit (7) for cryogenic distillation of the gas mixture M1 to produce liquid CO₂ (6) and a gas mixture M2 comprising carbon dioxide, methane, oxygen and hydrogen,
- One or more membranes (9) located on the flow of the gaseous mixture M2 and used to separate the methane (8) from the oxygen-hydrogen mixture (10) contained in the gaseous mixture M2,
- A means (11) for recycling the methane (8) from the gas mixture M2 to the membrane separation unit (5), and
- a vent (13) for discharging the oxygen-hydrogen mixture (10) from the gas mixture M2.

2. Installation according to claim 1, **characterised in that** it comprises a biogas compression means between the biogas production unit (3) and the membrane separation unit (5).

3. Installation according to claim 2, **characterised in that** the compression means is a lubricated screw compressor.

4. Installation according to one of Claims 1 to 3, **characterised in that** it comprises, between the biogas production unit (3) and the membrane separation unit (5), a unit for at least partially eliminating hydrogen sulphide and volatile organic compounds.

5. Installation according to claim 4, **characterized in that** the unit for at least partial removal of hydrogen sulphide and volatile organic compounds is a pressure swing adsorption unit.

6. Installation according to one of claims 1 to 5, **characterized in that** the membrane (9) located on the flow of gaseous mixture M2 is more permeable to oxygen and hydrogen than to methane.

7. Installation according to one of claims 1 to 6, **characterized in that** the membrane separation unit (5) comprises three or four membrane stages.

8. Installation according to claim 7, **characterised in that** the membrane separation unit (5) comprises :
- A first membrane separation stage provided with a first membrane capable of receiving the biogas flow (2) and providing a first permeate and a first retentate, said first membrane being more permeable to carbon dioxide than to methane,
- A second membrane separation stage provided with a second membrane adapted to receive a second feed gas and to provide a second permeate and a second retentate, said second membrane being more permeable to carbon dioxide than to methane, and said second membrane separation stage being connected in series with the first membrane separation stage such that the first retentate constitutes the second feed gas,
- A third membrane separation stage provided with a third membrane adapted to receive a third feed gas and to provide a third permeate and a third retentate, said third membrane being more permeable to carbon dioxide than to methane, and said third membrane separation stage being connected in series with the first membrane separation stage such that the first permeate constitutes the third feed gas.

9. Installation according to claim 8, **characterized in that** the membrane separation unit (5) may comprise a fourth membrane separation stage provided with a fourth membrane adapted to receive a feed gas and to supply a permeate and a retentate, said fourth membrane being more permeable to carbon dioxide than to methane, and said fourth membrane separation stage being connected in series with the third membrane separation stage such that the third retentate constitutes the fourth feed gas.

10. A process for producing methane and liquid CO₂, using the Installation (1) as defined in any of claims 1 to 9 and comprising:
a) A biogas (2) production stage,
b) A first stage of membrane separation of the biogas so as to produce biomethane (4) and a gaseous mixture M1 comprising mainly carbon dioxide,
c) A cryogenic distillation stage for the gaseous mixture M1 to produce liquid CO₂ (6) and a gaseous mixture M2 comprising carbon dioxide, methane, oxygen and hydrogen,
d) A second stage of membrane separation of the gaseous mixture M2 so as to separate the methane (8) from the oxygen-hydrogen mixture (10) included in the gaseous mixture M2,
e) A step for recycling the methane (8) from the gas mixture M2 to the membrane separation unit (5), and
f) a step for discharging the oxygen-hydrogen mixture (10) from the gaseous mixture M2.

11. Process according to claim 10, **characterized in that** it comprises between steps a) and b) a biogas compression step.

12. Process according to one of claims 10 or 11, **characterized in that** it comprises, between steps a) and b), a pre-purification step making it possible to remove at least some of the hydrogen sulphide and the volatile organic compounds.

13. Process according to claim 12, **characterized in that** the pre-purification step is a purification step by adsorption.

14. Process according to one of claims 10 to 13, **characterized in that** step f) is carried out continuously.
